# EUROPEAN PATENT SPECIFICATION

(11) **EP 2 066 259 B1**
(45) Date of publication and mention of the grant of the patent: **10.08.2016**
(21) Application number: 07839149.7
(22) Date of filing: 01.10.2007
(51) Int. Cl.: A61C 13/00

(54) **METHODS FOR MAKING PROVISIONAL AND LONG-TERM DENTAL CROWNS AND BRIDGES**
VERFAHREN ZUR HERSTELLUNG PROVISORISCHER UND LANGFRISTIGER ZAHNKRONEN UND -BRÜCKEN
PROCÉDÉ DE FABRICATION DE COURONNES ET DE BRIDGES DENTAIRES PROVISOIRES ET DÉFINITIFS

(30) Priority: 29.09.2006 US 848117 P
(43) Date of publication of application: 10.06.2009
(73) Proprietor: DENTSPLY International Inc., York, PA 17405-0872 (US)
(72) Inventor: SUN, Benjamin, Jiemin, York, PA 17402 (US); YOUNG, Andrew, Mathias, Dallastown, PA 17313 (US); LICHKUS, Andrew, M., York, PA 17404 (US)
(74) Representative: Hartz, Nikolai
(86) International application number: PCT/US2007/021166
(87) International publication number: WO 2008/042376

(56) References cited:
- EP-A- 0 813 856
- WO-A-01/10335
- WO-A-90/01727
- US-A- 4 571 188
- US-A- 5 270 350
- US-A1- 2003 113 689

## Description

### BACKGROUND OF THE INVENTION

### Field of the Invention

The present invention relates generally to methods for making provisional and long-term dental crowns, bridges, inlays, onlays, veneers, implants, and other dental restorations. A polymerizable composite resin having good dimensional shape-stability is used to make the dental restoration. A substructure such as a metal coping, ceramic substructure, or fiber-reinforced polymeric substructure can be used to support the polymerizable material. In one method, the restoration can be fabricated indirectly by a dental laboratory and sent to a dentist for placing in the mouth of a patient. In another version, the dentist can make the restoration in the dental office directly. The restoration can be made while the patient is sitting in the dental chair.

### Brief Description of the Related Art

Dental restorations, such as crowns and bridges, are used to restore or replace lost tooth structure, teeth, or oral tissue. Provisional (or temporary) restorations are intended to be used for a relatively short time. For example, a dentist will often use a provisional crown, until a permanent crown is ready to be placed in the mouth of a patient. Following one conventional procedure, the dentist makes the provisional crown for the patient at the dental office and a dental laboratory makes the permanent crown. The dentist mounts the provisional crown to protect the tooth while the permanent crown is being made. Later, the dentist removes the provisional crown and replaces it with the permanent crown.

The provisional crown typically is made from a polymeric material such as an acrylic. In one method used to prepare a provisional crown, a polymerizable material is placed in a pre-formed impression or matrix which then is inserted into the patient's mouth. The polymerizable material is molded over the prepared tooth structure by pressing the impression thereon. Then, the impression containing the molded material, which may only be partially-cured at this point, is removed from the patient's mouth. The molded material is fully cured by a self (chemical)-curing, light-curing, or heat-curing mechanism, which may occur outside of the mouth, to form the ultimate provisional crown. Finally, the dental practitioner places the provisional crown over the prepared tooth and bonds the crown to the tooth using temporary dental cement. The provisional crown helps maintain the health and function of the tooth while a dental laboratory manufactures the permanent crown. At a subsequent office visit, the dentist removes the provisional crown and checks the color, occlusion, and fit of the permanent crown. If satisfactory, the dentist affixes the permanent crown to the tooth using permanent dental cement.

Dental compositions containing polymerizable resins and filler particles often are used to prepare the provisional crowns, bridges, and other restorations. Such dental compositions can be self (chemically)-curable, light-curable, or dual-curable. The dental compositions are cured and hardened by different chemical mechanisms to form a strong and durable material. In one example, a dentist uses a self-curing composition, which is prepared from two paste components. One component used to make the composition is a base paste and the other component is a catalyst paste. The base paste typically contains polymerizable monomers such as methacrylate or acrylate monomers; a free-radical polymerization accelerator such as a tertiary amine; and fillers such as silica, glasses, or alumina. Meanwhile, the catalyst paste typically includes a polymerizable monomer, a free-radical polymerization initiator such as dibenzoyl peroxide, and fillers. To prepare the composition, the amine-containing base and peroxide-containing catalyst pastes are combined and mixed together. As the pastes are mixed together, the catalyst system (amine and peroxide) react with each other and initiate polymerization and hardening of the composition. The polymerization process involves a reaction between the reducing agent

(amine) and oxidizing agent (peroxide). This mechanism is commonly referred to as a redox mechanism.

Compositions that can be used to make temporary crown and bridges are described generally in the patent literature. For example, Tateosian et al., U.S. Patent 5,554,665 discloses a dental composition that is formed by the static mixing of two complementary pastes. A catalyst paste includes a polymerizable methacrylate, a peroxide, and a stabilizer such as butylated hydroxytoluene. The stabilizer is effective at preventing polymerization for at least 180 days at 23°C. A complementary accelerator and radiation-cure initiator paste includes a polymerizable methacrylate and a reducing agent for the peroxide such as dihydroxyethyl-p-toluidine. According to the '665 Patent, the paste compositions preferably have substantially the same viscosity and are mixed in a volume ratio between 1:1 and 1:5.

Xie, U.S. Patent 5,977,199 discloses a delivery system for delivering dental cement material for making temporary crowns and bridges. A catalyst paste and base paste are dispensed from a dual cartridge and mixed in a static mixer to form a polymerizing material. The catalyst paste comprises at least one polymerizable monomer, polymerization initiator, polymerization inhibitor, and filler. The base paste comprises at least one polymerizable monomer, at least one polymerization accelerator, polymerization inhibitor, and filler. According to the '199 Patent, the viscosity of the catalyst paste must be substantially greater than the viscosity of the base paste in order for the mixture to cure effectively.

Methods for making permanent crown, bridges, and other restorations having a metal coping or other supporting substructure are also known in the art. The metal copings are often covered with polymer-based materials. The metal copings support the polymer-based veneering layer and provide the required structural strength and toughness for the restoration to survive the long term forces of mastication. Polymer-based materials typically consist of polymerizable resins and filler particles. Such dental compositions can be self (chemically)-curable, light-curable, or dual-curable. The dental compositions are cured and hardened by different chemical mechanisms to form a strong and durable material. For example, Delahaye, US Patent 5,697,785 discloses a dental prosthesis containing a metal support with at least one reconstruction mass (polymeric binder containing inorganic filler dispersed therein) having sufficient bending strength and hardness is fixed to the metal support. One shortcoming with such conventional dental prosthetics is that the polymeric material, which is fixed to the metal support, can have shape instability while it is uncured. The material can change shape or slump somewhat while it is in an uncured condition.

WO 01110335 A1 discloses a method of forming a dental restoration with a low viscosity polymerizable material.

US 5 270 350 A discloses a thermoplastic having an optimum melt-temperature within the range from 110 to 180 °C, for forming a dental article.

Conventional provisional (temporary) dental restorations are used by patients for a relatively short period of time. As discussed above, the provisional crown is used by the patient while a permanent crown is made. Today, provisional crowns and bridges typically are used by a patient for a period of about three to six months. In general, such provisional restorations are effective, but there is a need in the dental field for restorations that can be used for longer periods.

The present invention provides methods for making such dental restorations. A dental practitioner can use the resulting dental restoration as a provisional expecting that it will remain in the patient's mouth for a time period of about 1 to about 12 months. On the other hand, if the dental practitioner wishes to use the dental restoration as a long-term product, expecting that it will remain in the patient's mouth for a period of time longer than about 12 months, he or she can do so. The dental restorations of this invention can be used as either provisional or long-term dental products because of their advantageous properties. Particularly, the restorations are strong and durable and do not break or fracture easily. Because of their mechanical strength, the restorations can withstand hard occlusion forces. In addition, the restorations have pleasing aesthetics matching the shade of natural teeth. Moreover, the restorations have good margins and interproximal contacts, providing the patient with comfort while promoting dental health. The restoration covers and supports the tooth structure sufficiently so that it protects the tooth's pulpal portion.

One object of the present invention is to provide a method that a dental laboratory can use to make dental crowns, bridges, inlays, onlays, veneers, implants, and other dental restorations having good mechanical strength, aesthetics, and occlusal fit. The restorations can be made with a supporting substructure such as a metal coping.

Another object of this invention is to provide a method that a dental practitioner can use to design and fabricate the crown, bridge, or other dental restoration "chairside." This would help make the crown manufacturing and fitting process less time-consuming and costly. The dentist may be able to mount the crown on the patient's tooth in a single office visit.

These and other objects, features, and advantages of this invention are evident from the following description and illustrated embodiments.

### SUMMARY OF THE INVENTION

This invention provides methods for making provisional and long-term dental crowns, bridges, inlays, onlays, veneers, implants, and other dental restorations according to claim 1. In one version, a dental laboratory can make the restoration. This method involves dispensing a heated polymerizable material into a matrix and positioning the matrix over an area of a pre-formed dental model that will receive the restoration. The material comprise polymerizable acrylic compound, polymerization system capable of being activated by light or heat for polymerizing the composition, and filler material. A substructure such as a metal coping, ceramic substructure, or fiber-reinforced polymeric substructure can be used to support the polymerizable material.

The material, which is preferably a composite material containing filler particulate, is allowed to set and cool and form a dimensionally shape-stable uncured restoration on the dental model. The matrix is then removed, while the composite material, in the shape of the restoration, remains seated on the model. Light is used to irradiate the composite material so that it cures and forms a hardened restoration directly on the model. Finally, the restoration is removed, finished, and polished. A visible light-curing sealant can be applied to provide a stain-resistant and glossy surface finish to the restoration if desired. The restoration is now ready to be mounted on a patient's tooth.

In another embodiment, a dental practitioner can make the dental restoration in the dental office. The restoration can be made while the patient is sitting in the dental chair. This method involves dispensing a heated polymerizable composite material into a hardened dental impression. The same composite material as described above can be used in this method. The practitioner positions the impression containing the composite material in the mouth of a patient so the material is molded over the targeted area that will receive the restoration. The material is allowed to cool and form a dimensionally shape-stable, uncured restoration. The impression containing the composite material is removed from the mouth. Then, the restoration is irradiated with light so that it cures and hardens. The restoration can be maintained within the impression material while it is being light-cured. Alternatively, the restoration can be removed from the impression material before it is light-cured.

Another chairside method involves removing the impression from the mouth, while leaving the shape-stable, uncured restoration over the targeted area inside of the mouth so that the restoration can be fitted. Then, the restoration is removed from the mouth and irradiated with light so that it cures and hardens. If desired, the uncured restoration can be irradiated with light while it is positioned in the mouth so that it partially cures.

### DETAILED DESCRIPTION OF THE PREFERRED EMBODIMENTS

The present invention relates to methods of making dental crowns, bridges, inlays, onlays, veneers, implants, and other dental restorations using a polymerizable material having good dimensional stability. In one embodiment, the restoration can be fabricated indirectly by a dental laboratory and sent to a dentist for placing in the mouth of a patient. In another version, the dentist can make the restoration at a patient chair in the dental office.

The polymerizable material used in accordance with this invention comprises a polymerizable acrylic compound and polymerization initiation system, capable of being activated by light or heat for polymerizing the composition. Preferably, the polymerizable material is a composite material containing filler particulate. By the term, "composite material" as used herein, it is meant that the material contains at least a portion of particulate filler. The polymerizable material and restorations prepared from such materials have certain properties as defined below.

The polymerizable dental materials of the invention preferably include from about 0.1 to about 100 percent by weight of a crystalline resin and from about 0 to 100 percent by weight of an amorphous component. When heated, the polymerizable dental materials soften and are more flowable and have less crystallinity. The polymerizable materials can rapidly solidify. Rapid solidification provides the materials with a combination of flowable and dimensional stability properties, depending upon temperature prior to polymerization. Furthermore, in a preferred embodiment, the polymerizable materials can partially recrystallize rapidly. This ability to rapidly recrystallize helps densify the polymeric products and provides the products with flowable and dimensional stability properties, depending upon temperature prior to polymerization. The polymerizable materials have several different characteristics, particularly that of: (i) flowable dental composites at elevated temperatures; ii) of packable composites at lower temperatures as the material cools down; and iii) of wax-like dental composites at room temperature and body temperature. The polymerizable material includes a portion of crystals that melts during polymerization. It is believed that this crystalline portion includes crystals of oligomer and/or crystals of monomer. The volume of liquid formed by melting the crystals is greater than the volume of crystals. This expansion reduces the shrinkage of the polymerizable dental material caused by polymerization.

"Crystallinity" as used herein refers to regularity and order within a material resulting in a heat of fusion of at least 1.0 J/g at and below 50°C. "Heat of Fusion" as used herein refers to enthalpy of fusion as determined by ASTM 793-95. Percent crystallinity is determined by measuring the heat of fusion using differential scanning calorimetry according to ASTM test method E 793-95.

"High strength dental polymeric material" as used herein means a material having flexural modulus of at least 200,000 psi and flexural strength of at least 5,000 psi. More preferably, the material has flexural modulus of at least 300,000 psi and flexural strength of at least 8,000 psi. Most preferably, the material has flexural modulus of at least 400,000 psi and flexural strength of at least 12,000 psi. The flexural strength and flexural modulus properties are measured according to ASTM D790 (1997).

"Wax-like" as used herein refers to material which is flowable (fluid) at and above 40°C, and becomes dimensionally stable (solidifies, that is, becomes non-fluid) at least at and below 23°C, within 5 minutes. Thus, wax-like material is flowable when it is at a temperature of 40°C and greater, and becomes dimensionally stable when it is at a temperature of 23°C and lower. Flowable wax-like material having a temperature from 100°C to 40°C, becomes dimensionally stable within 5 minutes upon cooling by exposing it to ambient temperature between 37°C and 0°C. Flowable wax-like composite paste having a temperature from 100°C to 40°C, becomes dimensionally stable within (in order of increasing preference) 4, 2, 1 or 0.5 minutes upon cooling by exposing it to ambient temperature between 23°C and 0°C.

"Dimensional stability" as used herein refers to material which is shape-stable as determined by testing methods according to ADA (American Dental Association) consistency test specification 19, Paragraph 4.3.4 (23°C), JAVA Vol. 94, April, 1977, pages 734-737.

### Polymerizable Material

### Polymerizable Acrylic Compounds

Polymerizable acrylic compounds that can be used in the composition of this invention, include, but are not limited to, mono-, di- or poly-acrylates and methacrylates such as methyl acrylate, methyl methacrylate, ethyl acrylate, isopropyl methacrylate, n-hexyl acrylate, stearyl acrylate, allyl acrylate, glycerol diacrylate, glycerol triacrylate, ethyleneglycol diacrylate, diethyleneglycol diacrylate, triethyleneglycol dimethacrylate, tetraethylene glycol di(meth)acrylate, 1,3-propanediol diacrylate, 1,3-propanediol dimethacrylate, trimethylolpropane tri(meth)acrylate, 1,2,4-butanetriol trimethacrylate, 1,4-cyclohexanediol diacrylate, 1,4-cyclohexanediol dimethacrylate, 1,6-hexanediol di(meth)acrylate, pentaerythritol triacrylate, pentaerythritol tetraacrylate, pentaerythritol tetramethacrylate, sorbitol hexacrylate, 2,2-bis[4-(2-hydroxy-3-acryloyloxypropoxy)phenyl]propane; 2,2-bis[4-(2-hydroxy-3-methacryloyloxypropoxy)phenyl]propane (Bis-GMA); modified Bis-GMA (the reaction product of Bis-GMA and 1,6 diisocyanatohexane); 2,2-bis[4-(acryloyloxy-ethoxy)phenyl]propane; 2,2-bis[4-(methacryloyloxy-ethoxy)phenyl]propane (or ethoxylated bisphenol A-dimethacrylate) (EBPADMA); urethane di(meth)acrylate (UDMA), diurethane dimethacrylate (DUDMA), polyurethane dimethacrylate (PUDMA); 4,13-dioxo-3,14 dioxa-5,12-diazahexadecane-1,16-diol diacrylate; 4,13-dioxo-3,14 dioxa-5,12-diazahexadecane-1,16-diol dimethacrylate; the reaction product of trimethyl 1,6-diisocyanatohexane and bisphenol A propoxylate and 2-hydroxyethyl methacrylate (TBDMA); the reaction product of 1,6 diisocyanatohexane and 2-hydroxyethyl methacrylate modified with water (HDIDMA); the reaction product of 1,6 diisocyanatohexane and 2-hydroxyethyl acrylate modified with water (HDIDA); alkoxylated pentacrythritol tetraacrylate; polycarbonate dimethacrylate (PCDMA); the bis-acrylates and bis-methacrylates of polyethylene glycols; and copolymerizable mixtures of acrylated monomers and acrylated oligomers.

In addition to the foregoing polymerizable acrylic compounds, the composition may contain acidic monomers such as dipentaerythritol pentacrylate phosphoric acid ester (PENTA); bis[2-(methacryloxyloxy)-ethyl]phosphate; and vinyl compounds such as styrene, diallyl phthalate, divinyl succinate, divinyl adipate and divinylphthalate. Diluent polymerizable monomers also may be added to the composition. For example, hydroxy alkyl methacrylates, ethylene glycol methacrylates, and diol methacrylates such as tri(ethylene glycol) dimethacrylate (TEGDMA) may be added to reduce viscosity and make the composition more suitable for application. A polymerizable acrylic compound can be used alone in the composition or mixtures of the compounds can be used. Mixtures of polymerizable monomers and oligomers, as described in the Examples below, are particularly preferred.

### Polymerization System

A polymerization system can be used in the composition of this invention, which initiates polymerization (hardening) of the composition by a light-curable or heat-curable reaction. In one embodiment, a photoactive agent such as, for example, benzophenone, benzoin and their derivatives, or alpha-diketones and their derivatives is added to the composition in order to make it light-curable. A preferred photopolymerization initiator is camphorquinone (CQ). Photopolymerization can be initiated by irradiating the composition with blue, visible light preferably having a wavelength in the range of about 380 to about 500 nm. A standard dental blue light-curing unit can be used to irradiate the composition. The camphorquinone (CQ) compounds have a light absorbency maximum of between about 400 to about 500 nm and generate free radicals for polymerization when irradiated with light having a wavelength in this range. Photoinitiators selected from the class of acylphosphine oxides can also be used. These compounds include, for example, monoacyl phosphine oxide derivatives, bisacyl phosphine oxide derivatives, and triacyl phosphine oxide derivatives. For example, 2,4,6-trimethylbenzoyl-diphenyl-phosphine oxide (TPO) can be used as the photopolymerization initiator. In one embodiment, a material referred to as "ALF" comprising camphorquinone (CQ); butylated hydroxytoluene (BHT); N,N-dimethylaminoneopentyl acrylate, and methacrylic acid can be used in the composition.

In another embodiment, heat-activated polymerization initiators, such as peroxides, can. be added to make the composition heat-curable. The peroxides generate free radicals to initiate polymerization and hardening of the composition at elevated temperature. Peroxides such as dibenzoyl peroxide (BPO), di-p-chlorobenzoyl peroxide, di-2,4-dichlorobenzoyl peroxide, tertiary butyl peroxybenzoate, methyl ethyl ketone peroxide, ditertiary butyl peroxide, dicumyl peroxide and cumene hydroperoxide, and the like can be used.

In addition to the photoactive and heat activated agents, the composition may include a polymerization inhibitor such as, for example, butylated hydroxytoluene (BHT); hydroquinone; hydroquinone monomethyl ether; benzoquinone; chloranil; phenol; butyl hydroxyanaline (BHT); tertiary butyl hydroquinone (TBHQ); tocopherol (Vitamin E); and the like. Preferably, butylated hydroxytoluene (BHT) is used as the polymerization inhibitor. The polymerization inhibitors act as scavengers to trap free radicals in the composition and to extend the composition's shelf life.

### Fillers

Conventional filler materials, including reactive and non-reactive fillers, may be added to the composition. Reactive fillers include metal oxides and hydroxides, metal salts, and glasses that are acid-reactive. Such fillers are commonly used in dental ionomer cements. Examples of metal oxides include, but are not limited to, barium oxide, calcium oxide, magnesium oxide, and zinc oxide can be used. Examples of metal salts include, but are not limited to, aluminum acetate, aluminum chloride, calcium chloride, magnesium chloride, zinc chloride, aluminum nitrate, barium nitrate, calcium nitrate, magnesium nitrate, and strontium nitrate. Suitable glasses include, but are not limited to, borate glasses, phosphate glasses, and fluoroaluminate glasses. The glasses may or may not have fluoride-releasing properties. The benefits of using fluoride-releasing glasses are well known. Such materials are capable of releasing fluoride into the oral cavity over the long term. Fluoride generally provides added protection against acid attack that can cause tooth decay. Although, such fluoride-releasing glasses are generally not used in temporary dental restorations, since such restorations are intended for short-term use only. Organic particles such as poly(methyl methacrylate), poly(methyl/ethyl methacrylate), crosslinked polyacrylates, polyurethanes, polyethylene, polypropylene, polycarbonates and polyepoxides , and the like also can be used as fillers.

A wide variety of non-acid reactive filler materials including nano-particles also can be added to the composition. Inorganic fillers, which can be naturally-occurring or synthetic, can be added. Such materials include, but are not limited to, silica, titanium dioxide, iron oxides, silicon nitrides, glasses such as calcium, lead, lithium, cerium, tin, zirconium, strontium, barium, and aluminum-based glasses, borosilicate glasses, strontium borosilicate, barium silicate, lithium silicate, lithium alumina silicate, kaolin, quartz, and talc. Preferably, the silica is in the form of silanized fumed silica. A preferred glass filler is silanized barium boron aluminosilicate.

The average particle size of the particles comprising the filler material is normally in the range of about 0.1 to about 10 microns and more preferably in the range of about 0.1 to about 5 microns. If a fumed silica filler material is used, the silica particles are preferably nanometer-sized. Other nano-sized particles can be used in the compositions. The silica particles and nano-particles preferably have an average diameter of less than 200 nm. The filler particles can be surface-treated with a silane compound or other coupling agent to improve bonding between the particles and resin matrix. Suitable silane compounds include, but are not limited to, gamma-methacryloxypropyltrimethoxysilane, gamma-mercaptopropyltriethoxysilane, gamma-aminopropyltrimethoxysilane, and combinations thereof.

In one preferred embodiment, the composition comprises about 5 to about 15 wt.% TBDMA; about 3 to about 10 wt.% HDIDMA; about 1.5 to about 5 wt.% HDIDA; about 5 to about 10 wt.% UDMA; about 5 to about 10 wt.% EBPADMA; about 0 to about 0.5 wt.% TPO; about 0.1 to about 1.0 wt.% ALF and about 50 to about 80 wt.% filler material (silicon dioxide / glass). In another embodiment, the composition is substantially free of the ALF activator.

In yet another preferred embodiment, the composition comprises about 0 to about 10 wt.% TBDMA; about 3 to about 15 wt% modified Bis-GMA, about 2 to about 10 wt.% HDIDMA; about 0 to about 5 wt.% HDIDA; about 0 to about 10 wt.% UDMA; about 0 to about 10 wt.% EBPADMA; about 0 to about 0.5 wt.% TPO; about 0.1 to about 1.0 wt.% ALF and about 50 to about 80 wt.% filler material (silicon dioxide / glass). These compositions were formulated to match the Refractive Index (RI) of the fillers used so as to obtain optimum translucency in the cured compositions. The matched RI of the components enabled the fabrication of translucent enamel layers and provided superior esthetics.

TBDMA is added to the composition in the form of semi-solid high molecular weight oligomers. The addition of TBDMA provides the composite with good toughness and strength, good handling properties and adjusts the Refractive Index (RI) of the composite material to provide the desired translucency. HDIDMA and HDIDA are added as solid, semi-crystalline monomers. The H₂O modified HDIDMA and HDIDA also provides a reduced crystallization time. Modified Bis-GMA, UDMA and EBPADMA are added as liquids in order to adjust filler load and softness at uncured stage and increase the flowability of the composite material. They also can further adjust the RI of the cured composite material, while assisting in decreasing the cure time. Lucirin-TPO and ALF are photoinitiators that initiate the polymerization of the monomers and oligomers and provide a relatively short cure time. Pigments are used to adjust the shade of the composite. The filler materials provide the composition with beneficial handling and mechanical properties.

As described further below, the composite material used in the method of this invention is dimensionally stable when it is in its uncured state. The composite material, with its semi-crystalline components as described above, forms a hard, non-sticky surface layer upon being crystallized. The semi-crystalline components are partially recrystallizable and help the material to rapidly solidify. When polymerized, the crystallized phase melts effectively resulting in volume expansion, which offsets polymerization shrinkage somewhat. The resulting polymeric material has low shrinkage and stress.

The above-described composition can be used to fabricate dental crowns, bridges, inlays, onlays, veneers, implants, and other dental restorations. Although the method of this invention is described primarily below as a method for making a dental crown, it should be understood that the method can be used to make any desired dental restoration.

### Methods

### Indirect Dental Laboratory Method

In one method for making the dental crown, which can be referred to as an indirect dental laboratory method, the dentist first takes an initial impression of the patient's entire dental anatomy including the tooth that will receive the crown using conventional impression-forming techniques.

The impression material is normally prepared from two paste components. At least one of the paste components contain an elastomeric material such as vinyl terminated polysiloxanes capable of undergoing addition polymerization. Once the pastes are mixed together, they start to harden and form a rubbery material. The dentist dispenses the impression material into a bite tray and inserts the tray into a patient's mouth. The patient bites down on the impression material in the tray. Then, the tray is removed from the mouth and the impression material is allowed to cure and harden. A negative impression of the teeth, including the unprepared tooth that will receive the crown, and surrounding gum tissue is formed.

In some cases, the dentist will prepare the tooth that will receive the crown during this office visit. The dentist performs "crown prep" work on the tooth by filing and grinding it to a "core" or "stump." A high-speed or low-speed handpiece equipped with a diamond bur is used to grind the tooth. The dentist then takes an impression of the prepared tooth following the same techniques as described above. Following this procedure means that two hardened impressions are formed, a first impression of the patient's full dental anatomy including the unprepared tooth and a second impression containing the crown-prepped tooth that will eventually receive the crown. At this point, a conventional provisional crown can be mounted over the prepared tooth structure to protect it while the permanent crown is being made.

The hardened impressions are sent to a dental laboratory that will fabricate the crown. The dental technician, at the laboratory, prepares a cast (or model) by pouring dental plaster or stone into the first hardened impression. This results in a finished plaster model having a shaped surface closely matching the patient's complete dental anatomy. In other cases, the dentist will prepare the finished plaster models and send them directly to the laboratory.

Next, the laboratory technician prepares a matrix using a putty made from silicone or other moldable material. The matrix putty has good handling properties. The techriician can mold and shape the matrix over the area of the model requiring the crown.

To make the matrix, the technician may need to fill in edentulous areas on the dental model with a denture tooth, shape and contour the tooth anatomy using wax or resin, and make other modifications to the model. The model teeth should be clean and free of any foreign debris. Then the matrix putty is molded over the shaped teeth. The matrix should be molded over the teeth so that it extends beyond the margins of the teeth. Particularly, it should extend at least 2 mm beyond the tooth margins.

The technician presses the matrix putty on the surface of the teeth to form the impression. The matrix putty is allowed to harden. Then, the hardened matrix is removed from the model. The resulting impression in the hardened matrix is an accurate negative likeness of the patient's tooth anatomy. Now, the crown is ready to be fabricated using the composite material of this invention.

It can be difficult to apply the composite material to the dental model if there are jagged edges or irregular formations present on the model. Thus, the dental model should first be prepared eliminate any unnecessary protrusions. The crown portion of the teeth of the model can be reduced using a bur or other sharp instrument. Typically, the crown portion is reduced by a depth of approximately 1.0 mm. Also, adjacent teeth on the model may be inadvertently fused together, and the interproximal contacts of the fused teeth should be removed using a saw instrument. Once the model has been adequately reduced and prepared, a thin coating of a separating agent (for example, oxygen barrier coating available from Dentsply) is applied to the surface of the model.

As discussed above, if the dentist has prepared the tooth for receiving the crown in the office visit and taken an impression of the prepared tooth, a second dental model of the patient's dental anatomy including the crown-prepped tooth is fabricated. The dental laboratory may make this model, or the dentist may make this model at his/her office and send it to the laboratory. In such cases, the oxygen barrier coating or other separating agent is applied to the surface of this model.

Next, the dental practitioner or laboratory technician dispenses layers of the dental composite material of this invention into the hardened matrix putty. The composite material is heated to a temperature generally above 40°C and preferably to a temperature in the range of about 50°C to about 100°C. If the temperature is too low, the material will not flow sufficiently. On the other hand, if the temperature is too high, the material will take a substantially long time to cool. The practitioner places layers of the composite material into the matrix beginning with the enamel layer. The heated enamel layer is carefully smoothed out using a spatula, preferably a heated spatula, or other applicator. Then, the practitioner applies more composite material to the matrix to form the dentin layer. Care should be taken that the correct amount of composite material is placed into the matrix. If a sufficient amount of composite material is not introduced, gaps will form in the resulting crown, and there will be occlusion problems. On the other hand, if too much composite material is introduced, the occlusion of the crown may be too high. This can occur even though the highly flowable nature of the heated composite material allows excess material to squeeze out easily. The shade of the composite material is carefully selected so that it matches the color of the patient's natural teeth.

Once the hardened matrix has been filled sufficiently with the composite material, it is placed over the area of the dental model that includes the tooth to receive the crown. If only one model of the teeth containing the unprepared tooth has been made and prepared, as described above, then the composite material is applied to this model. In cases where two dental models have been made, a first model containing the unprepared tooth and a second model containing the crown-prepped tooth, then the composite material is applied to the second model.

Once seated, the composite material is allowed to set for approximately one to three minutes to form a shape-stable, uncured provisional crown. The hardened matrix is then removed from the model leaving the composite material in the shape of a dental crown seated on the model. Although the composite material is uncured at this point, it is dimensionally stable, and it remains substantially fixed in place. The composite material has wax-like characteristics, good viscosity, and handling properties. The material does not slump or substantially change shape. Contoured and molded to form a crown on the targeted area of the dental model, the composite material does not expand or shrink substantially from that site. By contrast, conventional materials may have poor viscosity and handling characteristics. Such materials may be too thin so that they lose their shape or too thick so that they are difficult to mold.

If necessary, additional composite material can be added to touch-up the provisional crown as it is seated on the model. Any excess composite material on the model should be removed. A knife or other sharp instrument can be used to scrape off the excess material. Then, optional, a thin layer of a visible light curing (VLC) sealer is applied to the surface of the provisional crown. Now, the model, which is seated with the composite material in a crown shape, is placed in a light-curing oven and irradiated with curing light and heated in accordance with a pre-determined curing cycle. The curing time will depend upon many different factors including the light-curing oven used. In general, the materials of this invention completely set and harden in the range of about one (1) to about fifteen (15) minutes.

After the cured dental crown and supporting model are removed from the oven, the assembly is cooled. Then, the crown is removed from the model using fingers, a crown remover, or other suitable instrument. The crown is finished and polished using conventional techniques. The crown can be polished using buffing wheels. Aluminum oxide can be used to steam clean the interior surface of provisional crown for subsequent effective bonding to reline or cement material at dentist's office. If needed, the provisional crown also can be mechanically polished using buffing wheels and abrasives. Lastly, if the practitioner or technician wishes, a VLC sealant which provides a stain-resistant and glossy surface finish may be applied to the surface of the crown and the crown may be cured again in a light-curing oven.

The dental laboratory sends the finished crown back to the dentist. Once the dentist receives the crown, he or she can prepare the tooth that will receive the crown, if this has not already been done, by filing the tooth structure to a core or stump as described above. Then, the finished crown is affixed to the prepared tooth in the mouth of the patient using a suitable reline material and dental cement. Conventional dental cements, as are known in the dental field, may be used in this step. In cases where a temporary crown has been mounted over the tooth structure, it is first removed and then the crown of this invention is affixed to the tooth using dental cement.

In another embodiment, a substructure such as, for example, a metal coping can be used in the construction of the crown, bridge, or other restoration. The underlying substructure helps support the composite material used to make the restoration. Thus, the polymerizable composite material forms the visible portion of the crown and is bonded to the underlying substructure. Additional mechanical retention may be introduced to improve and maintain the integrity of bonding between substructure and the polymerizable composite material.

The strength and toughness of the crown is enhanced by using a metal coping or other supporting substructure. Cast metals, alloys, ceramo-metal materials, high strength ceramics, and fiber-reinforced composites can be used as copings or substructures for the restorations. The high strength ceramics include, but are not limited to, alumina, zirconia, mullitc, titanium oxide, magnesium oxide, SIALON and their mixtures. Metals and alloys and their mixtures, such as Nobel alloys, palladium-based alloys, cobalt-based alloys, nickel-based alloys, pure titanium and alloys, gold-based metal-ceramic alloys, nickel chromium alloys, and the like can be used as copings or substructures. Possible reinforced fibers include glass, carbon, graphite, polyaramid, high density polyethylene, alumina, and mixtures thereof, as well as other fibers known in the art.

There are several known methods used for fabricating substructures. For example, metal copings are commonly used and these copings can be made by a "lost wax" technique. Here, the dentist takes an impression of the prepared tooth, and a dental model (as described above) is prepared from the impression. A wax coping is then manually built-up on the model. After the wax coping has been finished, it is removed from the model and invested in a material that forms a mold (investment), which is heated so as to burn out the wax and leave a cavity. This cavity or die can be used to cast the metal coping. Any suitable metal or metal alloy such as gold alloy or nickel chromium alloy can be used to make the metal coping. After hardening, the mold is removed from the metal casting.

Another example is to use computer-aided design (CAD) and computer-aided manufacturing (CAM) technology systems to collect information and design and manufacture the copings. One such system for making esthetic metal-free crowns and bridges using zirconia as the substructure is available from Dentsply under the tradename, CERCON. In this system, a wax pattern (coping and pontic) with a minimum thickness of 0.4 mm is made. The system scans the wax pattern and mills a zirconia bridge coping from pre-sintered zirconia blanks. The coping is then sintered in a heat furnace for 6 to 8 hours. After the coping is placed back on the prepared surface of the dental model, primer and opaque coatings are applied to the coping surface.

The following method can be used for fabricating a single crown with metal substructure in accordance with this invention. First, impressions (or digital scans) are made of the areas in the patient's mouth that will receive the crown. The impressions (or digital scans) are taken prior to and after the tooth is prepared. Then, a dental model made from the second impression (or digital scan) is used to prepare the coping. A metal coping is prepared using conventional techniques as described above. A metal primer is applied to the surface of the metal coping, and an opaque coating is applied over the primer and cured. The finished metal coping is placed over the area of the preformed dental model intended to receive the restoration.

Then, the dental practitioner or laboratory technician dispenses layers of the composite polymerizable material into a hardened impression material or matrix in a manner as described above. For example, first an enamel layer of the composite material having the desired shade can be warmed and dispensed into the hardened impression. The enamel layer is spread around evenly and smoothed out, using a spatula or other instrument, to form a translucent incisal layer on the occlusal surface. Secondly, a more pigmented dentin layer can be applied. Once the hardened impression has been filled with the appropriate layers of composite material, it is immediately seated onto the prepared metal coping. After a few minutes, the hardened impression is removed, thereby exposing the uncured crown material supported by the metal coping. The uncured crown structure can be trimmed, shaped, sculpted, occluded, patched-up, and stained, thus providing a structure that is nearly finished prior to curing. A thin layer of sealer can be applied to the crown surface and the structure can be cured in a light-curing unit to form a final crown. This crown can be finally cemented over the patient's prepped tooth.

It is understood that any suitable substructure can be used to make the crown, bridge, or other restoration in accordance with this invention in addition to those mentioned above. Ceramic (metal-free) substructures such as CERCON systems and fiber-reinforced copings can be used in addition to metal copings.

The shape-stable polymerizable materials of this invention enable multi-chromatic veneers, crowns, bridges, implants, and other restorations to be fabricated with superb esthetics on various substructures.

### Dental Practitioner's Chairside Method

Following this method, a dental practitioner first takes an impression of the patient's teeth including the unprepared tooth that will receive the crown. The dentist takes this impression using the same techniques as described above. A plastic tray filled with polyvinyl siloxane (PVS), alginate, or other suitable impression material is used. The dentist presses the tray containing the silicone material on the surface of the teeth to form the impression. After the impression has been formed in the silicone material, the dentist removes the tray from the mouth. The impression is allowed to harden. The resulting hardened impression is an accurate negative likeness of the patient's tooth anatomy.

Then, the dentist places multiple layers of the above-described composite material into the hardened impression beginning with the enamel layer. The composite material is heated and carefully placed into desired incisal areas of the impression to form the enamel layer. Next, the dentin layer is injected into the impression. As discussed above, it is important that the correct amount of composite material be placed into the impression. The shade of the composite material is also carefully selected and customized so that it matches the color of the patient's natural teeth. Alternatively, the dentist may wish to inject only a single layer of the shaded composite material into the hardened impression.

After filling the impression with the composite material, it is inserted into the patient's mouth. It is positioned in the mouth in such a way that the composite material is molded and shaped over the previously prepared tooth that will receive the restoration. As the impression is fitted in the mouth, excess composite material is allowed to escape around the margins and adjacent teeth.

Alternatively, the dentist can prepare a model and work outside of the mouth. In this case, the dentist takes an impression of the prepared tooth using conventional impression material. A model including a core or stump tooth structure is then made by pouring or injecting a low viscosity and suitably rigid die material, such as die silicone, plaster, dental stone, or the like into the hardened impression. Then, the impression which contains the composite material as described above can be fitted over the dental model and a crown can be prepared. Following this method, the dentist can work extraorally to prepare the crown.

Turning back to the chairside method described above, the composite material is allowed to cool and form a dimensionally stable, uncured crown structure within the impression inside of the mouth. The impression containing the composite material is then removed from the mouth. If needed, the dentist trims excess composite material away from the margins and adjacent teeth. Next, the uncured, shaped crown structure is placed back inside of the mouth so that the crown is positioned over the prepared tooth structure. The patient can bite down on the crown so that margins, contacts, and occlusion can be checked by the practitioner and adjusted accordingly. The fitted crown is then removed from the mouth.

Next, the crown is irradiated with light so that it cures and forms a fully hardened crown product. A standard handheld dental curing light or light-curing oven may be used to fully cure the crown structure. Suitable light-curing ovens are available from Dentsply including, for example, the Eclipse® processing unit, Enterra™ visible light-curing (VLC) unit, and Triad® 2000 VLC unit. Suitable handheld light units include halogen, plasma arc (PAC), and light-emitting diode (LED) dental curing lights. These include, for example, those sold under the brand names: QHL75® Lite (Dentsply); Spectrum® 800 curing unit (Dentsply); Sapphire (DenMat); SmartLite iQ2™ (Dentsply); Elipar® (3M Espe); and L.E. Demetron II™ (Kerr).

The crown can be finished with burs and polished using customary finishing techniques as needed. In addition, a VLC sealant, which provides a stain-resistant and glossy surface finish may be applied to the crown.

The finished crown is now ready to be permanently affixed to the tooth. Conventional permanent cements, as known in the dental field, may be used in this step.

In a second embodiment of this method, the composite material cools and forms a stable, uncured crown structure inside of the mouth. But, in the next step, only the impression is removed from the mouth. The shape-stable uncured crown structure remains in the mouth. The dentist can then trim excess composite material away from the margins of the crown and adjacent teeth. As the patient bites down upon the crown, the margins, contacts, and bite occlusion can be checked by the practitioner and adjusted accordingly. Next, the shaped crown structure is partially cured in the mouth using a handheld dental curing light as described above. The partially cured crown is then removed from the mouth. It may be finished with a bur as needed. In addition, a sealant, which provides a stain-resistant and glossy surface finish, may be applied to the crown. A dental curing light or light-curing oven may be used to fully cure the crown structure.

A third version of this method is similar to the method described above, except there is no partial curing step. The composite material is completely cured outside of the mouth. Particularly, this method involves first cooling the composite material to form a stable, uncured crown structure within the mouth. In the next step, only the impression material is removed from the mouth. This leaves the uncured crown structure in place. The practitioner can check the crown fit and make any needed adjustments. Then, the shaped crown structure is removed and fully cured by exposing it to light radiation outside of the mouth using dental curing lights or ovens.

Following a fourth method, the dentist also can work outside of the mouth. In this method, the impression containing the composite material is first placed over a dental model. The impression is then removed from the model, but the composite material remains. This leaves an uncured, shape stable crown structure positioned on the model. The crown structure can be partially light-cured on the model if the dentist wishes to perform this step. Then, the partially-cured crown can be removed and finished with burs and polished to its final desired shape. After applying a sealant to the crown's surface, it is ready to be fully cured and hardened.

In yet another embodiment, the uncured, shaped crown structure is removed from the impression material and only the crown, by itself, is placed back inside of the mouth. The crown is mounted over the prepared tooth structure and margins, contacts, and occlusion are checked. The crown is then removed from the mouth. As described above, the crown can be finished and a sealant can be applied to its surface before the crown is placed in a light-curing oven and fully cured..

One advantage of composite material of this invention is that it can be shaped and molded to form stable crown structures that can be partially light-cured inside of the mouth. This partial-curing step normally occurs after the margins, contacts, and occlusion have been checked and adjusted accordingly. The above-mentioned dental curing lights may be used to partially cure the material. Then, the partially-cured crown is removed from the mouth and finished with burs and polishers to its final desired shape. After applying a sealant to the crown's surface, it is ready to be fully cured and hardened. The crown may be placed in a standard light-curing oven, as mentioned above, and fully cured via light irradiation.

The veneers, crowns, bridges, implants, and other restorations produced by the methods of this invention have superb esthetics, durability, and other desirable properties. The uncured, shape-stable restorations prepared according to the methods have advantages over conventional materials with respect to occlusal adjustment, comfort, fitting. The uncured, shape-stable restorations can be adjusted and modified by melting, carving, molding, pressing, and other techniques. Restorations having ideal occlusal surfaces that provide a comfortable bite for the patient can be made per this invention.

Preferably, the restorations produced by this invention are high strength dental polymeric materials having a flexural modulus of at least 500,000 psi and a flexural strength of at least 5,000 psi. More preferably, the high strength dental polymeric materials have a flexural modulus of at least 1,000,000 psi and a flexural strength of at least 10,000 psi.

The dental restorations produced by this invention have excellent properties and can be used as provisional or long-term restorations. A dental practitioner can use the dental restoration as a provisional expecting that it will remain in the patient's mouth for a time period of about 1 to about 12 months. Moreover, if there is a need, the dental practitioner can use the restoration long-term, expecting that it will remain in the patient's mouth for a period of time longer than about 12 months. The properties and other features of the restorations are such that they can be used for either short-term or long-term periods. The restorations have high mechanical strength, pleasing aesthetics, a hard and smooth surface finish, and good margins and contacts making them ideal products for protecting the dental health of a patient. This invention meets the needs of dental profession for quick, easy, and accurate ways to fabricate provisional and long-term veneers, crowns, bridges, and other restorations.

The present invention is further illustrated by the following examples, but these examples should not be construed as limiting the scope of the invention.

### EXAMPLES

### Example 1

### Preparation of Oligomer

A reactor was charged with 1176 grams of trimethyl-1,6-diisocyanatohexane (5.59 mol) and 1064 grams of bisphenol A propoxylate (3.09 mol) under dry nitrogen flow and heated to about 65°C under positive nitrogen pressure. To this reaction mixture, 10 drops of catalyst dibutyltin dilaurate were added. The temperature of the reaction mixture was maintained between 65°C and 140°C for about 70 minutes and followed by additional 10 drops of catalyst dibutyltin dilaurate. A viscous paste-like isocyanate end-capped intermediate product was formed and stirred for 100 minutes. To this intermediate product, 662 grams (5.09 mol) of 2-hydroxyethyl methacrylate and 7.0 grams of BHT as an inhibitor were added over a period of 70 minutes while the reaction temperature was maintained between 68°C and 90°C. After about five hours stirring under 70°C, the heat was turned off, and oligomer was collected from the reactor as semi-translucent flexible solid and stored in a dry atmosphere.

### Example 2

### Preparation of Monomer

A reaction flask was charged with 700 grams of 1,6-diisocyanatohexane and heated to about 70°C under a positive nitrogen pressure. To this reactor were added 1027 grams of 2-hydroxyethyl methacrylate, 0.75 gram of catalyst dibutyltin dilaurate and 4.5 grams of butylated hydroxy toluene (BHT). The addition was slow and under dry nitrogen flow over a period of two hours. The temperature of the reaction mixture was maintained between 70°C and 90°C for another two hours and followed by the addition of 8.5 grams of purified water. One hour later, the reaction product was discharged as clear liquid into plastic containers and cooled to form a white solid and stored in a dry atmosphere.

### Example 3

### Preparation of Monomer

A reaction flask was charged with 168 grams of 1,6-diisocyanatohexane and heated to about 70°C under a positive nitrogen pressure. To this reactor were added 228 grams of 2-hydroxyethyl acrylate, 0.12 gram of catalyst dibutyltin dilaurate and 0.86 grams of butylated hydroxy toluene (BHT). The addition was slow and under dry nitrogen flow over a period of two hours. The temperature of the reaction mixture was maintained between 70°C and 85°C for another three hours and followed by the addition of 0.9 grams of purified water. One hour later, the reaction product was discharged as clear liquid into plastic containers and cooled to form a white solid and stored in a dry atmosphere.

### Examples 4A - 4D

### Preparation of Polymerizable Composite Materials

In the following Examples 4A-4D, different polymerizable composite materials were prepared as described further below.

**Table 1. Formulations of Composite Resins**

| **Components** | **Example 4A (wt %)** | **Example 4B (wt %)** | **Example 4C (wt %)** | **Example 4D (wt%)** |
|---|---|---|---|---|
| Oligomer of Example 1 | 8.072 | 8.033 | 8.072 | 8.033 |
| Monomer of Example 2 | 5.24 | 5.24 | 5.24 | 5.24 |
| Monomer of Example 3 | 3.50 | 3.50 | 3.50 | 3.50 |
| (HEMA-UDMA) Branched aliphati urethane dimethacrylate (7,7,9-trimethyl-4,13-dioxo-3,14 dioxa-5,1 diazahexadecane-1,16-diol dimethacrylate) | 5.83 | 5.83 | 5.83 | 5.83 |
| Ethoxylated bisphenol A dimethacrylate* | 6.99 | 6.99 | 6.99 | 6.99 |
| (Lucirin TPO) 2,4,6-Trimethyibenzoyldiphenyl phosphine oxide | | | 0.10 | 0.10 |
| Methacrylic acid | 0.085 | 0.085 | 0.06 | 0.06 |
| Butylated hydroxytoluene | 0.004 | 0.004 | 0.003 | 0.003 |
| N,N-dimethylaminoneopentyl acryla | 0.163 | 0.163 | 0.117 | 0.117 |
| gamma-methacryloxypropyl trimethoxy silane | 0.050 | 0.050 | 0.036 | 0.036 |
| (Camphorquinone) bicyclo[2,2,1] heptane-2,3-dione-1, trimethyl-(IS) | 0.048 | 0.048 | 0.034 | 0.034 |
| Amorphous Silica (silaned) | 0.50 | | 0.50 | |
| Barium fluoro alumino borosilicate glass*** | 69.50 | 70.00 | 69.50 | 70.00 |
| Titanium Dioxide** | 0.017 | 0.050 | 0.017 | 0.050 |
| Yellow Iron Oxide 7055 | | 0.005 | | 0.005 |
| Cromophtal Red-BRN 2-napthalenecarboxamide, N,N'-(2-chloro-1,4-phenylene) bis{4-{(2,5-dichlorophenyl) azo}-3-hydroxy-} | | 0.0003 | | 0.0003 |
| Black Iron Oxide 7053 | | 0.001 | | 0.001 |
| Lumilux Blue LZ fluorescing agent (dihydroxy terepthalate acid ester) | 0.001 | 0.001 | 0.001 | 0.001 |
| Total % | 100 | 100 | 100 | 100 |

| | | | | |
|---|---|---|---|---|
| * SR348 - purchased from Sartomer Company, Inc. ** Titanium Dioxide is one of three different types of TiO₂: Titanox 328, 3328, 325 *** Particles have one or more different average particle sizes and are selected from average particles sizes range from 0.1 micrometer to 10 micrometers. | | | | |

### Example 5

Table 2 shows the components of the compositions of Examples 5A through 5D. The compositions of Examples 5A through 5D were prepared by mixing and degassing the components shown in Table 2 at 85°C to 95°C.

**Table 2. Formulations of Composite Resins**

| Components | Example 5A (wt %) | Example 5B (wt %) | Example 5C (wt %) | Example 5D (wt %) |
|---|---|---|---|---|
| Oligomer of Example 1 | 4.619 | 4.0926 | 1.149 | 1.129 |
| Monomer of Example 2 | 4.20 | 5.25 | 4.00 | 4.54 |
| Monomer of Example 3 | 1.45 | 2.50 | 1.80 | 3.03 |
| (HEMA-UDMA) Branched aliphatic urethane dimethacrylate (7,7,9-trimethyl-4,13-dioxo-3,14 dioxa-5,12-diazahexadecane-1,16-diol dimethacrylate) | 5.45 | 5.00 | 5.00 | 5.05 |
| Modified Bis-GMA | | 5.75 | 7.20 | 11.9 |
| Ethoxylated bisphenol A dimethacrylate* | 6.00 | 5.0 | 6.00 | |
| (Lucirin TPO) 2,4,6-Trimethylbenzoyldiphenyl phosphine oxide | | 0.02 | 0.02 | 0.10 |
| Methacrylic acid | 0.067 | 0.076 | 0.076 | 0.058 |
| Butylated hydroxytoluene | 0.003 | 0.004 | 0.004 | 0.003 |
| N,N-dimethylaminoneopentyl acrylate | 0.132 | 0.152 | 0.152 | 0.115 |
| gamma-methacryloxypropyl trimethoxy silane | 0.040 | 0.054 | 0.054 | 0.041 |
| (Camphorquinone) bicyclo[2,2,1] heptane-2,3-dione-1,1,7-trimethyl-(IS) | 0.038 | 0.044 | 0.044 | 0.033 |
| Amorphous Silica (silaned) | 2.00 | 0.50 | 0.50 | 0.50 |
| Barium fluoro alumino borosilicate glass*** | 76.00 | 71.50 | 74.00 | 73.50 |
| Titanium Dioxide** | | 0.051 | | |
| Yellow Iron Oxide 7055 | | 0.005 | | |
| Cromophtal Red-BRN | | 0.0001 | | |
| 2-napthalenecarboxamide, N,N'-(2-chloro-1,4-phenylene) bis{4-{(2,5-dichlorophenyl) azo}-3-hydroxy-} | | | | |
| Black Iron Oxide 7053 | | | | |
| Lumilux Blue LZ fluorescing agent (dihydroxy terepthalate acid ester) | 0.001 | 0.0013 | 0.001 | 0.001 |
| Total % | 100 | 100 | 100 | 100 |

| | | | | |
|---|---|---|---|---|
| * SR348 - purchased from Sartomer Company, Inc. ** Titanium Dioxide is one of three different types of TiO2: Titanox 328, 3328, 325 *** Particles have one or more different average particle sizes and are selected from average particles sizes range from 0.1 micrometer to 10 micrometers. | | | | |

**Table 3. Mechanical Properties of Compositions in Examples Compared to Commercial Materials**

| Compositions | Flexural Stress (MPa) | Flexural Modulus (GPa) | Wear Resistance - Volume Loss (mm³) |
|---|---|---|---|
| 4A | 164 | 11.0 | 0.032 |
| 4B | 171 | 10.8 | 0.033 |
| 4C | 171 | 11.3 | 0.029 |
| 4D | 158 | 9.9 | 0.029 |
| 5A | 160 | 12.5 | 0.0121 |
| 5B | 166 | 10.0 | 0.0133 |
| 5C | 153 | 10.0 | 0.0060 |
| 5D | 162 | 9.8 | 0.0145 |
| SINFONY enamel E2 (3M) | 105 | 4.6 | 0.081 |
| SINFONY dentin A2 (3M) | 109 | 4.6 | 0.115 |
| GRADIA enamel E2 (GC) | 101 | 6.1 | 0.060 |

Volume loss (cubic mm at 400,000 cycles), was used as a measure of the wear resistance of the polymerized compositions. A three body cyclic abrasion wear machine (Leinfelder method in vitro/ University of Alabama) was used to determine volume loss. Samples were cured in an Enterra™ (sold by Dentsply International) curing unit for 5 or 6 minutes.

Flexural Strength and Flexural Modulus of the polymerized compositions were measured by using three-point bend test on Instron bending unit according to ISO 10477. Samples were cured in an Enterra™ curing unit for 5 minutes.

### Example 6. Laboratory Fabricated Crown Requiring Reline to Mount.

A silicone matrix putty was molded and shaped over a targeted tooth and area on a dental model requiring a crown. The putty was molded over the targeted tooth so that it extended about 2 mm beyond the tooth's margins. The matrix putty was allowed to harden. Then, the hardened putty was removed from the model. After the dental model was adequately reduced, a thin coat of model separator (oxygen barrier coating available from Dentsply International) was applied to the prepared areas.

Then, a small amount of heated enamel resin (prepared in above Example 4A) was applied into the incisal area of the hardened matrix putty. A hot spatula was used to spread out the resin and remove any excess material from the matrix. Then, a sufficient amount of the dentin resin (prepared in above Example 4B) was extruded from a heated syringe to fill the matrix. Thus, the matrix was filled with a composite resin material. Immediately thereafter, the filled matrix was placed over the prepared dental model and excess material was allowed to escape around the margins. Once seated, the composite material was allowed to set for approximately one (1) to three (3) minutes to form the shape-stable crown. The matrix was then removed from the model leaving the resulting crown in place. After the matrix was removed, excess composite material around the margins and adjacent teeth on the model was carefully removed. At this point, the crown can be easily shaped, contoured, occluded and adjusted as needed since it is shape-stable and in an uncured state.

The model with the mounted crown was then placed inside of a light-curing oven and irradiated with curing light and heated in accordance with a pre-determined curing cycle. The crown was then removed from the model and shaped and contoured as needed. Finally, a thin layer of a visible light curing sealer was applied to the surface of the crown and the crown was cured for about two minutes. The finished crown was relined and cemented on a crown-prepped tooth in a patient's mouth.

### Example 7. Laboratory Fabricated Crown Mounted Using Dental Cement.

In this example, two dental models were made, a first model containing the unprepared tooth and a second model containing the crown-prepped tooth.
A silicone matrix putty was molded and shaped over the targeted area of the first dental model. The putty was molded over the targeted tooth so that it extended about 2 mm beyond the tooth's margins. The matrix putty was allowed to harden. Then, the hardened putty was removed from the model. A thin layer of oxygen barrier coating was applied to the second dental model.

Then, a small amount of heated enamel resin (prepared in above Example 4C) was applied into the incisal area of the hardened matrix putty. A hot spatula was used to spread out the resin and remove any excess material from the matrix. Then, a sufficient amount of the dentin resin (prepared in above Example 4D) was extruded from a heated syringe to fill the matrix. Thus, the matrix was filled with a composite resin material. Immediately thereafter, the filled matrix was placed over the second dental model (containing the crown-prepped tooth) and excess material was allowed to escape around the margins. Once seated, the composite material was allowed to set for approximately one (1) to three (3) minutes to form the shape-stable crown. The matrix was then removed from the model leaving the resulting crown in place. After the matrix was removed, excess composite material around the margins and adjacent teeth was carefully removed. The resulting crown can be easily shaped, contoured, occluded and adjusted as needed since it is shape-stable and in an uncured state.

A thin layer of a visible light curing sealer was applied to the surface of the crown. The model with the mounted crown was then placed inside of a light-curing oven and irradiated with curing light and heated in accordance with a pre-determined curing cycle. The resulting crown was finished and polished as needed. Then, the crown was cemented on a crown-prepped tooth in a patient's mouth.

### Example 8. Laboratory Fabricated Bridge Requiting Reline.

A silicone matrix putty was molded and shaped over the area of a dental model requiring a dental bridge. The matrix putty was allowed to harden. Then, the hardened putty was removed from the model. After the dental model was adequately reduced, a thin layer of oxygen barrier coating was applied to the prepared areas of the model.

Then, a small amount of heated enamel resin (prepared in above Example 4C) was applied into the incisal area of the hardened matrix putty. A hot spatula was used to spread out the resin and remove any excess material from the matrix. Then, a sufficient amount of the dentin resin (prepared in above Example 4D) was extruded from a heated syringe to fill the matrix. Thus, the matrix was filled with a composite resin material. Immediately thereafter, the filled matrix was placed over the dental model and excess material was allowed to escape around the margins. Once seated, the composite material was allowed to set for approximately two (2) to five (5) minutes to form the shape-stable bridge. The matrix was then removed from the model leaving the resulting bridge. After the matrix was removed, excess composite material around the margins and adjacent teeth was carefully removed. The resulting bridge can be easily shaped, contoured, occluded and adjusted as needed.

The model with the mounted bridge was then placed inside of a light-curing oven and irradiated with curing light and heated in accordance with a pre-determined curing cycle (including a flip cure as needed). The bridge was then removed from the model and shaped and contoured as needed. Finally, a thin layer of a visible light curing sealer was applied to the surface of the bridge and the bridge was cured for about two minutes. The finished bridge was relined and cemented on the prepared teeth in a patient's mouth.

### Example 9. Laboratory Fabricated Bridge Mounted Using Dental Cement.

In this example, two dental models were made, a first model containing the unprepared tooth and a second model containing the bridge-prepped teeth.

A silicone matrix putty was molded and shaped over the targeted area of the first dental model. The matrix putty was allowed to harden. Then, the hardened putty was removed from the model. A thin layer of oxygen barrier coating was applied to the second dental model.

Then, a small amount of heated enamel resin (prepared in above Example 5C) was applied into the incisal area of the hardened matrix putty. A spatula was used to spread out the resin and remove any excess material from the matrix. Then, a sufficient amount of the dentin resin (prepared in above Example 5B) was extruded from a heated syringe to fill the matrix. Thus, the matrix was filled with a composite resin material. Immediately, the filled matrix was placed over the second dental model (containing the bridge-prepped teeth) and excess material was allowed to escape around the margins. Once seated, the composite material was allowed to set for approximately two (2) to five (5) minutes to form the shape-stable bridge. The matrix was then removed from the model leaving the resulting bridge. After the matrix was removed, excess composite material around the margins and adjacent teeth was carefully removed. The resulting bridge can be easily shaped, contoured, occluded and adjusted as needed. Then, a thin layer of visible light curing sealer was applied to the surface of the bridge. The model was placed in a light-curing oven and irradiated with curing light and heated in accordance with a pre-determined curing cycle (including a flip cure as needed). The resulting bridge was finished and polished as needed. The bridge was then cemented on the prepared teeth in the patient's mouth.

### Example 10. Chairside Crown Mounted Using Dental Cement.

A quadrant impression of the area for receiving a crown in a patient's mouth was taken prior to preparation of the tooth. The margin areas of the impression were trimmed to within 2 mm of the tooth margin areas to allow easy escape of excess material. The tooth for receiving the crown was prepared and lightly lubricated with Vaseline or a similar separating medium (including light-curable separating medium). A small amount of the heated enamel resin of Example 4A was applied into the incisal area of the impression. A hot spatula was used to spread out the resin and remove any excess in the impression. A desired amount of the dentin resin of Example 4B was extruded from a heated compule or syringe to fill the impression. The impression was placed immediately onto the prepared tooth and excess material was allowed to escape around the margins. After the impression was removed, excess material around the margins and adjacent teeth was carefully removed. The crown can be bitten, shaped, contoured, occluded and adjusted as needed. Then, the crown was removed from the prepared tooth. Die silicone was injected into the cavity of the crown to form a die. After a sealer was applied, the crown was cured in an Enterra™ light-curing unit (available from Dentsply International) for 6 minutes. The crown was finished and polished. It was then cemented on a crown-prepped tooth in the patient's mouth.

### Example 11. Chairside Crown Mounted Using Dental Cement.

A quadrant impression of the area for receiving a crown in a patient's mouth was taken prior to the preparation of the tooth. The margin areas of the impression were trimmed to within 2 mm of the tooth margin areas to allow easy escape of excess material. The tooth for receiving crown was prepared and lightly lubricated with Vaseline. A small amount of the enamel resin of Example 4C was applied into the incisal area of the impression. A spatula was used to spread out the resin and remove any excess in the impression. A desired amount of the dentin resin of Example 4D was extruded from a heated compule or syringe to fill the impression. The impression was immediately placed onto the prepared tooth and excess material was allowed to escape around the margins. After the impression was removed, excess material around the margins and adjacent was carefully removed. The crown was removed from the prepared tooth. After a sealer was applied, the crown was cured in a Triad® light-curing unit (Dentsply) for 10 minutes. The crown was finished and polished. It was then cemented on a crown-prepped tooth in the patient's mouth.

### Example 12. Chairside Crown Made Using a Partial Light-Curing Process.

A quadrant impression of the area for receiving a crown in a patient's mouth was taken prior to the preparation of a tooth. The margin areas of the impression were trimmed to within 2 mm of the tooth margin areas to allow easy escape of excess material. The tooth for receiving crown was prepared and lightly lubricated with Vaseline. A small amount of the enamel resin of Example 5C was applied into the incisal area of the impression. A spatula was used to spread out the resin and remove any excess in the impression. A desired amount of the dentin resin of Example 5B was extruded from a heated compule or syringe to fill the impression. Immediately, the impression was placed onto the prepared tooth and excess material was allowed to escape around the margins. The impression was removed and the shape-stable crown remained in place. Then, the crown was partially cured with a handheld light for 5 seconds. A QHL75 curing light (Dentsply) was used. (Alternatively, other suitable dental curing lights also may be used.) The crown was then removed from the mouth and the margins were finished to desired shape. After a sealer was applied, the crown was fully cured in an Enterra™ light-curing unit (Denstply) for 5 minutes. The crown was then cemented on the crown-prepped tooth in the patient's mouth.

### Example 13. Chairside 3 Unit Bridge Mounted Using Dental Cement.

A quadrant impression of the area for receiving a dental bridge in a patient's mouth was taken prior to the preparation and extraction of teeth. The margin areas of the impression were trimmed to within 2 mm of the tooth margin areas to allow easy escape of excess material. Teeth were extracted and the teeth for receiving the bridge were dry prepared and lightly lubricated with Vaseline. A small amount of the enamel resin of Example 5D was applied into the incisal areas of the impression. A spatula was used to spread out the resin and remove any excess in the impression. A desired amount of the dentin resin of Example 4D was extruded from a heated syringe to fill the impression. Immediately, the impression was placed onto the prepared teeth and tooth extracted area and excess material was allowed to escape around the margins. After the impression was removed, the excess material around the margins and adjacent teeth was carefully removed. The resulting bridge can be bitten, shaped, contoured, occluded and adjusted as needed. The bridge was removed and die silicone was injected into the cavities of the crowns and under the pontic to form a supporting model. After a sealer was applied, the bridge was cured in an Enterra™ light unit (Dentsply) for 6 minutes and flip cured for an additional 1.5 minutes. The bridge was finished and polished. It was then cemented on the prepared teeth in the patient's mouth.

### Example 14. Chairside 3 Unit Bridge Made Musing a Partial Light-Curing Process.

A quadrant impression of the area for receiving a dental bridge in a patient's mouth was taken prior to the preparation and extraction of teeth. The margin areas of the impression were trimmed to within 2 mm of the tooth margin areas to allow the easy escape of excess material. Teeth were extracted and the teeth for receiving the bridge were prepared and lightly lubricated with Vaseline. A small amount of the enamel resin of Example 5C was applied into the incisal areas of the impression. A spatula was used to spread out the resin and remove any excess in the impression. A desired amount of the dentin resin of Example 5B was extruded from a heated syringe to fill the impression. Then, the impression was immediately placed onto the prepared teeth and tooth extracted area and excess material was allowed to escape around the margins. After the impression was removed, excess material around the margins and adjacent teeth carefully removed. The resulting bridge can be bitten, shaped, contoured, occluded and adjusted as needed. The bridge was partially cured with a handheld light for 15 seconds. (QHL75 curing light from Dentsply) The bridge was removed from the prepared teeth and the margins were finished to desired shapes. Die silicone was injected into the cavities of the crowns and under the pontic to form a supporting model (Optionally, the partially cured bridge might can be cured in a light-curing unit without using die silicone). After a sealer was applied, the bridge was cured in an Enterra™ light-curing unit (Dentsply) for 5 minutes and flip cured for an additional 1.5 minutes. The bridge was finished and locally polished. It was then cemented on the prepared teeth in the patient's mouth.

### Example 15. Crown Havine Metal Substructure

A matrix (impression) was prepared on a tooth model, which was made from the impression of the patient's dental anatomy prior to preparation of the tooth intended to receive the crown . The margin areas of the impression were trimmed to within 2 mm of the tooth margins on the model to allow for easy escape of excess material. Then, a dental model made from an impression of the prepped tooth was used for preparation of the coping. A metal coping was prepared according to conventional techniques. The metal surface of the coping was sandblasted and steam cleaned. After metal primer was applied on the surface of the coping, an opaque coating was applied and cured for 5 minutes in Enterra™ light-curing unit (Dentsply). Then, a second layer of opaque coating was applied as needed to completely mask the metal surface, and this coating also was cured. The finished metal coping was placed on the model.

Next, a small amount of the enamel resin of Example 4C was applied into the incisal area of the impression. A hot spatula was used to spread out the resin. Then, a small amount of dentin resin of Example 4D was extruded from a heated syringe to fill the impression. Immediately, the impression was placed onto the prepared model and excess material was allowed to escape around the margins. The impression was then removed and excess material around the margins and adjacent teeth was carefully removed. The resulting crown structure was shaped and adjusted as needed. A sealer coating was then applied, and the crown was cured in an Enterra™ light-curing unit (Dentsply) for 5 minutes. The crown was finished and locally polished as needed. It was then sent to a dentist and cemented in a patient's mouth.

### Example 16. Bridge Having Metal Substructure

A short-span dental bridge having a metal substructure was prepared in the same manner as the crown in Example 15.

### Example 17. Crown Having Zirconia Substructure

A matrix (impression) was prepared on a tooth model, which was made from the impression of the patient's dental anatomy mouth prior to preparation of the tooth intended to receive the crown. The margin areas of the impression were trimmed to within 2 mm of the tooth margins on the model to allow for easy escape of excess material. A zirconia substructure was prepared according to the Cercon system (Dentsply). The surface of the zirconia , substructure was steam cleaned. After primer was applied on the surface of the substructure, an opaque coating was applied and cured for 5 minutes in an Enterra™ light-curing unit (Dentsply). Then, a second layer of opaque coating was applied as needed to completely mask the zirconia surface, and this coating also was cured. The finished zirconia substructure was placed on the model.

Next, a small amount of the enamel resin of Example 5C was applied into the incisal area of the impression. A spatula was used to spread out the resin. Then, a small amount of dentin resin of Example 5B was extruded from a heated syringe to fill the impression. Immediately, the impression was placed onto the prepared model and excess material was allowed to escape around the margins. The impression was then removed and excess material around the margins and adjacent teeth was carefully removed. The resulting crown structure was shaped and adjusted as needed. A sealer coating was then applied, and the crown was cured in an Eclipse® light-curing unit (Dentsply) for 3 minutes. The crown was finished and locally polished as needed. It was then sent to a dentist and cemented in a patient's mouth.

### Example 18. Bridge Having Zirconia Substructure

A short-span dental bridge having a zirconia substructure was prepared in the same manner as the crown in Example 17.

### Example 19. Crown Having Fiber-Reinforced Substructure

A Matrix was prepared on a tooth model, which was made from the impression of the area for receiving a crown in a patient's mouth prior to preparation of the tooth. The margin areas of the impression were trimmed to within 2 mm of the margin areas to allow the easy escape of excess material. A fiber-reinforced coping was prepared and cured according to prior arts. The finished fiber-reinforced substructure was placed on the model.

A small amount of the enamel resin of Example 4A was applied into the incisal area of the Matrix. A hot spatula was used to spread out the resin and remove any excess in the Matrix. Desired amount of Dentin resin of Example 4B was extruded from a heated syringe to fill the Matrix and immediately placed the Matrix onto above model and excess material was allowed to escape around the margins. After the impression was removed, excess material around margins and adjacent was carefully removed. The crown formed can be shaped, contoured, occluded and adjusted as needed. After sealer was applied, it was cured in an Enterra™ light unit (sold by Dentsply International Inc.) for 6 minutes. It was finished and locally polished as needed. It was then sent to dentist and cemented in patient's mouth.

### Example 20. Bridge Having Fiber-Reinforced Substructure

A short-span dental bridge having a fiber-reinforced substructure was prepared in the same manner as the crown in Example 19.

Workers skilled in the art will appreciate that various modifications can be made to the embodiments and description herein without departing from the scope of the present invention covered by the appended claims.

## Claims

1. A method of forming a dental restoration, comprising the steps of:
(i) dispensing a heated polymerizable material into a matrix;
(ii) positioning the matrix over an area of a pre-formed dental model that will receive the restoration and allowing the polymerizable material to cool so as to form a dimensionally shape- stable, uncured restoration;
(iii) removing the matrix while maintaining the uncured restoration seated on the model;
(iv) irradiating the polymerizable material with light so that it fully cures and forms a hardened restoration; and
(v) removing the cured restoration from the model,
wherein the polymerizable material is a wax-like material which is flowable or fluid at and above 40°C, and which becomes dimensionally stable at least at and below 23°C within 5 minutes, and comprises:
(a) polymerizable acrylic compound, wherein the polymerizable acrylic compound of the material is a semi-crystalline material; and
(b) polymerization initiation system, capable of being activated by light or heat, for polymerizing the material.

2. The method of claim 1, wherein the polymerization initiation system of the material comprises a photoactive agent, or
wherein the polymerizable material further comprises particulate filler.

3. The method of claim 2, wherein the filler material is selected from the group of inorganic and organic materials and mixtures thereof.

4. A method of making a dental restoration according to claim 1, wherein the dental restoration has a supporting substructure on a dental model of a patient's dental anatomy, which method comprises, prior to step (i), a step of placing a supporting substructure over a targeted area on the dental model that will receive the restoration.

5. The method of claim 4, wherein the substructure is a metallic material, and preferably wherein a metal primer coating is applied to the substructure prior to placing the substructure on the model, and preferably wherein an opaque coating is applied over the metal primer coating and the coated substructure is light-cured prior to placing the substructure on the model.

6. The method of claim 4, wherein the substructure is a ceramic material, preferably zirconia.

7. The method of claim 4, wherein the substructure is a fiber-reinforced composite.

8. The method of claim 4, wherein the polymerizable material further comprises particulate filler.

## Patentansprüche

1. Verfahren zum Bilden einer Dental-Restauration, umfassend die Schritte:
(i) Abgabe eines erwärmten polymerisierbaren Materials in eine Matrix;
(ii) Positionieren der Matrix über einem Gebiet eines vorgeformten Zahnmodells, welches die Restauration erhalten wird, und Abkühlen lassen des polymerisierbaren Materials, um so eine dimensionsweise formstabile, nicht-gehärtete Restauration zu bilden;
(iii) Entfernen der Matrix während die nicht-gehärtete Restauration auf dem Modell belassen wird;
(iv) Bestrahlen des polymerisierbaren Materials mit Licht, so dass es vollständig aushärtet und eine gehärtete Restauration bildet; und
(v) Entfernen der gehärteten Restauration von dem Modell,
wobei das polymerisierbare Material ein wachsähnliches Material ist, das bei und über 40°C fließfähig oder flüssig ist und das innerhalb von 5 Minuten wenigstens bei und unter 23°C formstabil wird, und das folgendes umfasst:
(a) eine polymerisierbare Acrylverbindung, wobei die polymerisierbare Acrylverbindung des Materials ein semi-kristallines Material ist; und
(b) ein Polymerisationsinitiator-System, das zum Polymerisieren des Materials durch Licht oder Wärme aktivierbar ist.

2. Verfahren nach Anspruch 1, wobei das Polymerisationsinitiator-System des Materials ein photoaktives Mittel umfasst oder wobei das polymerisierbare Material ferner einen partikulären Füllstoff umfasst.

3. Verfahren nach Anspruch 2, wobei das Füllmaterial aus der Gruppe aus anorganischen und organischen Materialien und Mischungen derselben ausgewählt ist.

4. Verfahren zum Herstellen einer Dental-Restauration nach Anspruch 1, wobei die Dental-Restauration eine stützende Unterstruktur auf einem Zahnmodell der Zahnanatomie eines Patienten aufweist, und wobei das Verfahren vor Schritt (i), einen Schritt des Platzierens der stützenden Unterstruktur über einem Zielgebiet auf dem Zahnmodell, das die Restauration erhalten wird, umfasst.

5. Verfahren nach Anspruch 4, wobei die Unterstruktur ein metallisches Material ist und wobei bevorzugt ein Metall-Primer-Überzug auf die Unterstruktur aufgebracht wird bevor die Unterstruktur auf dem Modell platziert wird, und wobei bevorzugt eine undurchsichtige Beschichtung über dem Metall-Primer-Überzug aufgebracht wird und die beschichtete Unterstruktur vor dem Platzieren derselben auf dem Model mittels Licht gehärtet wird.

6. Verfahren nach Anspruch 4, wobei die Unterstruktur ein keramisches Material ist, bevorzugt Zirkoniumdioxid.

7. Verfahren nach Anspruch 4, wobei die Unterstruktur ein faserverstärktes Komposit ist.

8. Verfahren nach Anspruch 4, wobei das polymerisierbare Material ferner einen partikulären Füllstoff umfasst.

## Revendications

1. Procédé de formation d'une restauration dentaire, comprenant les étapes consistant à :
(i) disposer un matériau polymérisable chauffé dans une matrice ;
(ii) positionner la matrice au-dessus d'une zone d'un modèle dentaire préformé qui va recevoir la restauration et laisser le matériau polymérisable refroidir de sorte qu'il forme une restauration non durcie de forme dimensionnellement stable ;
(iii) retirer la matrice tout en maintenant la restauration non durcie logée sur le modèle ;
(iv) irradier le matériau polymérisable avec une lumière de sorte qu'il durcisse complètement et forme une restauration durcie ; et
(v) retirer du modèle la restauration durcie,
dans lequel le matériau polymérisable est un matériau analogue à une cire qui est coulant et fluide à 40°C et plus, et qui devient dimensionnellement stable au moins à 23°C et moins en l'espace de 5 minutes, et comprend :
(a) un composé acrylique polymérisable, le composé acrylique polymérisable du matériau étant un matériau semi-cristallin ; et
(b) un système amorceur de polymérisation capable d'être activé par une lumière ou la chaleur, pour polymériser le matériau.

2. Procédé selon la revendication 1,
dans lequel le système amorceur de polymérisation du matériau comprend un agent photoactif, ou
dans lequel le matériau polymérisable comprend en outre une charge particulaire.

3. Procédé selon la revendication 2, dans lequel le matériau de charge est choisi dans l'ensemble des matériaux inorganiques et organiques et leurs mélanges.

4. Procédé pour préparer une restauration dentaire selon la revendication 1, dans lequel la restauration dentaire présente une sous-structure de support sur un modèle dentaire de l'anatomie dentaire d'un patient, lequel procédé comprend, avant l'étape (i), une étape consistant à placer une sous-structure de support sur une zone ciblée du modèle dentaire qui va recevoir la restauration.

5. Procédé selon la revendication 4, dans lequel la sous-structure est un matériau métallique, et de préférence dans lequel un revêtement d'apprêt métallique est appliqué à la sous-structure avant que la sous-structure soit placée sur le modèle, et de préférence dans lequel un revêtement opaque est appliqué sur le revêtement d'apprêt métallique et la sous-structure revêtue est durcie par une lumière avant que la sous-structure soit placée sur le modèle.

6. Procédé selon la revendication 4, dans lequel la sous-structure est un matériau céramique, de préférence la zircone.

7. Procédé selon la revendication 4, dans lequel la sous-structure est un composite renforcé par des fibres.

8. Procédé selon la revendication 4, dans lequel le matériau polymérisable comprend en outre une charge particulaire.
